# EUROPÄISCHE PATENTSCHRIFT

(11) **EP 2 977 586 B1**
(45) Veröffentlichungstag und Bekanntmachung des Hinweises auf die Patenterteilung: **16.05.2018**
(21) Anmeldenummer: 14178435.5
(22) Anmeldetag: 24.07.2014
(51) Int. Cl.: F02B 33/42, F04F 13/00, F02B 39/00, F02B 39/14

(54) **Druckwellenlader und Verfahren zum Betrieb eines Druckwellenladers**
Method for operating pressure wave charger and pressure wave charger
Système de suralimentation à ondes de pression et procédé de fonctionnement d'un système de suralimentation à ondes de pression

(43) Veröffentlichungstag der Anmeldung: 27.01.2016
(73) Patentinhaber: Antrova AG, 8260 Stein am Rhein (CH)
(72) Erfinder: Skopil, Mario, 8903 Birmensdorf (CH)
(74) Vertreter: Fenner, Seraina

(56) Entgegenhaltungen:
- DE-A1-102006 020 522
- DE-A1-102011 051 589
- DE-A1-102012 219 201
- DE-B3-102011 054 055
- FR-A- 1 154 867
- GB-A- 1 522 299
- GB-A- 2 479 802
- US-A- 2 759 660
- US-A- 2 800 120

## Beschreibung

Die Erfindung betrifft einen Druckwellenlader. Die Erfindung betrifft weiter ein Verfahren zum Betrieb eines Druckwellenladers.

### Stand der Technik

Bei mit Verbrennungsmotoren betriebenen Fahrzeugen erfordert die Gesetzgebung zunehmend niedrigere Schadstoffemissionen und insbesondere einen geringen Kraftstoffverbrauch. Der Wandlungsprozess von Kraftstoffenergie in mechanische Energie unterliegt dabei dem ideellen Carnotprozess, so dass der Wirkungsgrad eines Verbrennungsmotors auf maximal ca. 40% begrenzt ist. Die restliche in dem Kraftstoff enthaltene Energie wird als Verlustwärme über den Motorblock des Verbrennungsmotors oder über das Abgas abgegeben. Um den Wirkungsgrades von Verbrennungsmotoren weiter zu steigern werden Verbrennungsmotoren aufgeladen. Hierbei wird die zum Verbrennungsprozess benötigte angesaugte Frischluft komprimiert, so dass ein höherer Füllungsgrad des Zylinders bei einem Ladungswechselvorgang erreicht wird. Der höhere Füllungsgrad des Zylinders mit Frischluft ermöglicht eine höhere Einspeisung, beispielsweise Einspritzung von Kraftstoff und somit eine Erhöhung der Verbrennungsleistung pro Verbrennungstakt, bei gleichbleibender Reibleistung des Verbrennungsmotors. Hierdurch steigt die effektive Leistung des Verbrennungsmotors, so dass es möglich ist für eine gleiche zur Verfügung gestellte Leistung einen hubraumschwächeren Motor einzusetzen und somit den Kraftstoffverbrauch sowie den CO₂-Ausstoss zu senken.

Als Verdichter zum Aufladen eines Verbrennungsmotors ist insbesondere ein Druckwellenlader geeignet. Der Druckwellenlader, wie dieser beispielsweise aus der Druckschrift EP0235609A1 bekannt ist, nutzt dabei im direkten Gaskontakt die Energie der Abgasströmung zur Verdichtung der angesaugten Frischluft und wird in der häufigsten Bauform mit einem rotierenden Zellenrotor ausgebildet. Um eine effektive Wirkungsgradsteigerung des Verbrennungsmotors zu erreichen ist es von zentraler Bedeutung, dass der Aufladeprozess mittels Druckwellenlader ebenfalls mit einem hohen Wirkungsgrad erfolgt.

Bekannte Druckwellenlader weisen den Nachteil auf, dass der Spalt zwischen dem rotierenden Zellenrotor und feststehenden Teilen relativ gross ausgestaltet ist, um während dem Betrieb des Druckwellenladers eine mechanische Beschädigung des rotierenden Zellrotors zu vermeiden. Dieser relativ grosse Spalt hat einen reduzierten Wirkungsgrad zur Folge, sowohl während dem Betrieb, insbesondere jedoch auch während dem Kaltstart. Die Offenlegungsschrift DE 102012101922A1 offenbart einen Druckwellenlader mit reduzierter Spaltbreite. Nachteilig an dieser Vorrichtung ist, dass diese eine Klemmneigung aufweist, sodass nach dem Auftreten eines Klemmens eine Reduzierung der Spaltbreite nicht mehr möglich ist. Die FR 1 154 867 A und die US 2 800 120 A offenbaren einen Druckwellenlader der eine Lagerkühlung im Heissgasgehäuse aufweist.

### Darstellung der Erfindung

Aufgabe der Erfindung ist es einen Druckwellenlader mit erhöhtem Wirkungsgrad zu bilden. Aufgabe der Erfindung ist weiter einen Druckwellenlader mit einem derartigen Verfahren zu betreiben, dass der Druckwellenlader während dem Betrieb einen erhöhten Wirkungsgrad aufweist.

Diese Aufgabe wird gelöst mit einem Druckwellenlader aufweisen die Merkmale von Anspruch 1. Die Unteransprüche 2 bis 9 betreffen weitere vorteilhafte Ausgestaltungen. Die Aufgabe wird weiter gelöst mit einem Verfahren zum Betrieb eines Druckwellenladers aufweisend die Merkmale von Anspruch 10. Die Unteransprüche 11 bis 13 betreffen weitere vorteilhafte Verfahrensschritte.

Die Aufgabe wird insbesondere gelöst mit einem Druckwellenlader zum Verdichten von Frischluft für einen Verbrennungsmotor, umfassend ein Kaltgasgehäuse, ein Heissgasgehäuse sowie ein dazwischen angeordnetes Rotorgehäuse, wobei innerhalb des Rotorgehäuses ein rotierbarer Zellenrotor angeordnet ist, und wobei das Heissgasgehäuse einen Hochdruckabgaskanal und einen Niederdruckabgaskanal umfasst, und wobei das Kaltgasgehäuse einen Frischluftkanal und einen Ladeluftkanal umfasst, und wobei der Hochdruckabgaskanal, der Niederdruckabgaskanal, der Frischluftkanal und der Ladeluftkanal Fluid leitend mit dem Zellenrotor verbunden sind, und wobei das Heissgasgehäuse ein erstes Lager und das Kaltgasgehäuse ein zweites Lager umfasst, und wobei der Zellenrotor eine Rotorwelle umfasst, welche im ersten und im zweiten Lager gelagert ist, und wobei das Heissgasgehäuse einen Wärmetauscher umfasst welcher derart ausgestaltet ist, dass zumindest das erste Lager kühlbar ist, wobei der Wärmetauscher derart ausgestaltet ist, dass der Hochdruckabgaskanal kühlbar ist, wobei der Wärmetauscher derart ausgestaltet ist, dass vorgängig das erste Lager gekühlt ist und nachfolgend der Hochdruckabgaskanal, dass die Kühlleistung des Wärmetauschers während eines Kaltstarts in einer ersten Startphase reduziert ist oder dass der Wärmetauscher ausgeschaltet ist, bis der Druckwellenlader eine Minimaltemperatur aufweist, und dass die Kühlleistung des Wärmetauschers danach erhöht wird. Die Aufgabe wird weiter insbesondere gelöst mit einem Verfahren zum Betrieb eines Druckwellenlagers zum Verdichten von Frischluft für einen Verbrennungsmotor, wobei der Druckwellenlader ein Kaltgasgehäuse, ein Heissgasgehäuse und ein dazwischen angeordnetes Rotorgehäuse umfasst, wobei innerhalb des Rotorgehäuses ein rotierbarer Zellenrotor angeordnet ist, und wobei das Heissgasgehäuse einen oder mehrere Hochdruckabgaskanäle und einen oder mehrere Niederdruckabgaskanäle (im Folgenden wird repräsentativ jeweils nur ein Kanal angeführt) umfasst, wobei das Heissgasgehäuse durch einen Wärmetauscher derart gekühlt wird, dass ein im Heissgasgehäuse angeordnetes erstes Lager gekühlt wird, und wobei der Zellenrotor vom ersten Lager und von einem im Kaltgasgehäuse angeordneten zweiten Lager gelagert wird, wobei der Wärmetauscher derart ausgestaltet ist, dass auch der Hochdruckabgaskanal kühlbar ist und somit der durch den Hochdruckabgaskanal strömende Hochdruckabgasstrom gekühlt wird, wobei der Kühlstrom derart im Wärmetauscher geleitet wird, dass das Kühlmittel zuerst das erste Lager kühlt und danach dem Hochdruckabgaskanal zugeleitet wird um diesen zu kühlen, dass die Kühlleistung des Wärmetauschers während eines Kaltstarts in einer ersten Startphase reduziert ist oder dass der Wärmetauscher ausgeschaltet ist, bis der Druckwellenlader eine Minimaltemperatur aufweist, und dass die Kühlleistung des Wärmetauschers danach erhöht wird. Der erfindungsgemässe Druckwellenlader umfasst ein Heissgasgehäuse mit einem Wärmetauscher, wobei der Wärmetauscher derart angeordnet und ausgestaltet ist, dass dieser zumindest ein im Heissgasgehäuse angeordnetes erstes Lager für den Zellenrotor kühlt, In einer besonders vorteilhaften Ausgestaltung wird im Heissgasgehäuse zudem der vom Verbrennungsmotor zuströmende Hochdruckabgasstrom kühlt. Das vom Verbrennungsmotor zuströmende Abgas weist eine Abgastemperatur von bis zu etwa 1050 °C auf. Die Kühlung des zuströmenden Abgasstroms im Heissgasgehäuse hat zur Folge, dass das Heissgasgehäuse eine tiefere Temperatur aufweist, und dass der Abgasstrom mit einer tieferen Temperatur in das Zellenrad einströmt, sodass auch das Zellenrad eine tiefere Betriebstemperatur aufweist. Dies hat zur Folge, dass sowohl das Heissgasgehäuse als auch das Zellenrad während dem Erwärmen eine geringere Ausdehnung erfährt, beziehungsweise während dem Abkühlen ein geringeres Zusammenziehen aufweist. Die Kühlung ermöglich es ein erstes Lager für den Zellenrotor im Heissgasgehäuse anzuordnen. Dadurch ist es möglich den Zellenrotor im ersten Lager zu lagern, sodass die Stirnseite des Zellenrotors eine definierte Lage aufweist, und dadurch der Spalt zwischen der Stirnseite des Zellenrotors und der Stirnseite des Heissgasgehäuses klein gehalten werden kann, In einer besonders vorteilhaften Ausgestaltung ist der Zellenrotor beidseitig gelagert, in einem ersten Lager im Heissgasgehäuse, und in einem zweiten Lager im Kaltgasgehäuse. In einer vorteilhaften Ausgestaltung sind das erste Lager und/oder das zweite Lager zudem geschmiert, insbesondere ölgeschmiert oder fettgeschmiert. Die beidseitige Lagerung des Zellenrotors ermöglicht eine Abkehr von der bisher bekannten fliegenden Lagerung des Zellenrotors, welche den Nachteil hatte, dass sich eine trompetenförmige Verformung des Rotors bei hohen Temperaturen und Drehzahlen ergab. Der erfindungsgemässe Druckwellenlader weist den Vorteil auf, dass keine oder kaum eine trompetenförmige Verformung des Zellenrotors mehr auftritt, Der erfindungsgemässe Druckwellenlader weist den Vorteil auf, dass das Kaltspiel zwischen Zellenrotor und Heissgasgehäuse äusserst klein gehalten werden kann, und die Spaltbreite vorzugsweise in einem Bereich von 0,05 bis 0,2 mm liegt, vorzugsweise bei etwa 0,1 mm, Der erfindungsgemässe Druckwellenlader weist auf Grund dieser geringen Spaltbreite den Vorteil auf, dass die Kaltstarteigenschaften wesentlich verbessert sind, da der Druckwellenlader auf Grund der geringen Spaltbreite bereits während der Kaltstartphase einen genügend hohen Ladedruck erzeugen kann. Der erfindungsgemässe Druckwellenlader erzeugt bereits bei einer Temperatur im Bereich von beispielsweise etwa 200 °C einen genügend hohen Ladedruck. Erfindungsgemäß wird die Kühlleistung des Wärmetauschers derart geregelt, dass während dem Kaltstart nur mit einer geringen Kühlleistung oder gar nicht gekühlt wird, damit der Druckwellenlader in möglichst kurzer Zeit auf die erforderliche Betriebstemperatur von beispielsweise etwa 200°C gelangt. Die Kühlleistung wird ab einer gewissen Betriebstemperatur, beispielsweise ab 300°C, erhöht, um das einströmende Abgas zu kühlen.

In einer besonders vorteilhaften Ausgestaltung ist der Wärmetauscher zudem derart ausgestaltet, dass dieser auch den aus dem Druckwellenlader ausströmenden Abgasstrom kühlt, vorzugsweise indem der Niederdruckabgaskanal gekühlt wird.

Der erfindungsgemässe Druckwellenlader weist den weiteren Vorteil auf, dass eine Nachentzündung unverbrannter Kohlenwasserstoffe in der Auspuffanlage nicht oder kaum mehr auftritt, da die Temperatur des der Auspuffanlage zugeleiteten Abgasstroms und vorzugsweise auch die Temperatur des Heissgasgehäuses deutlich reduziert ist, So kann der das Heissgasgehäuse verlassende Abgasstrom beispielweise eine Temperatur von etwa 700 °C oder eine Temperatur von unter 700 °C aufweisen. Das Heissgasgehäuse kann an der Oberfläche beispielsweise eine Temperatur von etwa 120 °C aufweisen. Vorteilhafterweise ist der Wärmetauscher als im Heissgasgehäuse verlaufende Kanäle ausgestaltet, durch welche als Kühlmedium Wasser fliesst. Ein derart ausgestalteter Wärmetauscher ist besonders geeignet das Heissgasgehäuse zu kühlen, sodass es beispielsweise möglich ist das Heissgasgehäuse aus Aluminium oder einer Aluminiumlegierung zu bilden. Ein Heissgasgehäuse gefertigt aus einem derartigen Metall nimmt während dem Betrieb keinen thermischen Schaden, da das Metall eine hohe Wärmeleitung aufweist, und das Heissgasgehäuse derart gekühlt wird, dass keine Überhitzung auftritt.

Der erfindungsgemässe Druckwellenlader weist zudem den Vorteil auf, dass durch die Kühlung des Abgasstroms der Volumenstrom des Abgases reduziert wird, was zur Folge hat, dass entweder die Dimension der Abgasleitungen im Druckwellenlader reduziert werden kann, oder dass ein bestehender Druckwellenlader mit erhöhter Abgasförderkapazität betrieben werden kann.

Der erfindungsgemässe Druckwellenlader weist zudem den Vorteil auf, dass dieser mit weniger temperaturfesten Werkstoffen und somit mit günstigeren Werkstoffen ausgebildet werden kann, insbesondere das Heissgasgehäuse und das Kaltgasgehäuse, jedoch auch der Zellenrotor. In einer besonders vorteilhaften Ausgestaltung wird zumindest das Heissgasgehäuse aus Aluminium, einer Aluminiumlegierung oder einer sonstigen Leichtmetalllegierung ausgestaltet, um ein gewichtsmässig leichteres Heissgasgehäuse auszubilden, und um vorzugsweise ein Heissgasgehäuse mit erhöhter Wärmeleitfähigkeit auszubilden. Ein derartiger Druckwellenlader weist den Vorteil auf, dass dieser besonders leicht ausgestaltet ist, und dass der Abgasstrom besonders effizient gekühlt werden kann. Ein Heissgasgehäuse aus Aluminium oder einer entsprechenden Legierung weist den Vorteil auf, dass dieses sich sehr schnell erwärmt, sodass der Druckwellenlader bei einem Kaltstart in sehr kurzer Zeit die erforderliche Betriebstemperatur aufweist. Ein Verbrennungsmotor ausgerüstet mit einem erfindungsgemässen Druckwellenlader weist somit vorteilhafte Kaltstarteigenschaften auf. Dies hat zur Folge, dass der Druckwellenlader, beispielsweise bei einem Benzinmotor mit kleinem Hubraum, sehr schnell nach dem Kaltstart Wirkung zeigt, was beispielsweise ein besseres Beschleunigungsverhalten und eine geringere Schadstoffemission zur Folge hat.

In einer besonders vorteilhaften Ausgestaltung ist der Zellenrotor zweigeteilt, und umfasst in Verlaufsrichtung der Rotorwelle ein erstes Zellenrotorteil und nachfolgend ein zweites Zellenrotorteil, wobei die beiden Zellenrotorteile in Verlaufsrichtung der Rotorwelle unter Ausbildung eines Spaltes gegenseitig beabstandet sind. Vorteilhafterweise ist ein derartiger Zellenrotor derart ausgebildet, dass eine Erwärmung der Zellenrotorteile zur Folge hat, dass sich der Spalt verkleinert.

Der Wärmetauscher umfasst vorteilhafterweise eine Wasserkühlung, insbesondere derart, dass im Heissgasgehäuse Kühlkanäle angeordnet sind, welche vom Kühlwasser durchströmt sind.

Der Zellenrotor ist vorteilhafterweise aktiv angetrieben, beispielsweise durch einen Riemenantrieb, oder insbesondere durch einen Elektromotor, der vorteilhafterweise im Kaltgasgehäuse angeordnet ist.

### Kurze Beschreibung der Zeichnungen

Die zur Erläuterung der Ausführungsbeispiele verwendeten Zeichnungen zeigen:
- Fig. 1: einen Längsschnitt durch einen schematisch dargestellten Druckwellenlader;
- Fig. 2: eine Prinzipdarstellung der Gasführung im Zellenrad;
- Fig. 3: einen Längsschnitt durch ein geteiltes Zellenrad;
- Fig. 4: einen Längsschnitt durch ein weiteres Ausführungsbeispiel eines geteilten Zellenrads;
- Fig. 5: eine Frontansicht eines Heissgasgehäuses;
- Fig. 6: eine Seitenansicht eines Druckwellenladers;
- Fig. 7: einen Schnitt durch den Druckwellenlader entlang der Schnittlinie A-A gemäss Figur 6.

Grundsätzlich sind in den Zeichnungen gleiche Teile mit gleichen Bezugszeichen versehen.

### Wege zur Ausführung der Erfindung

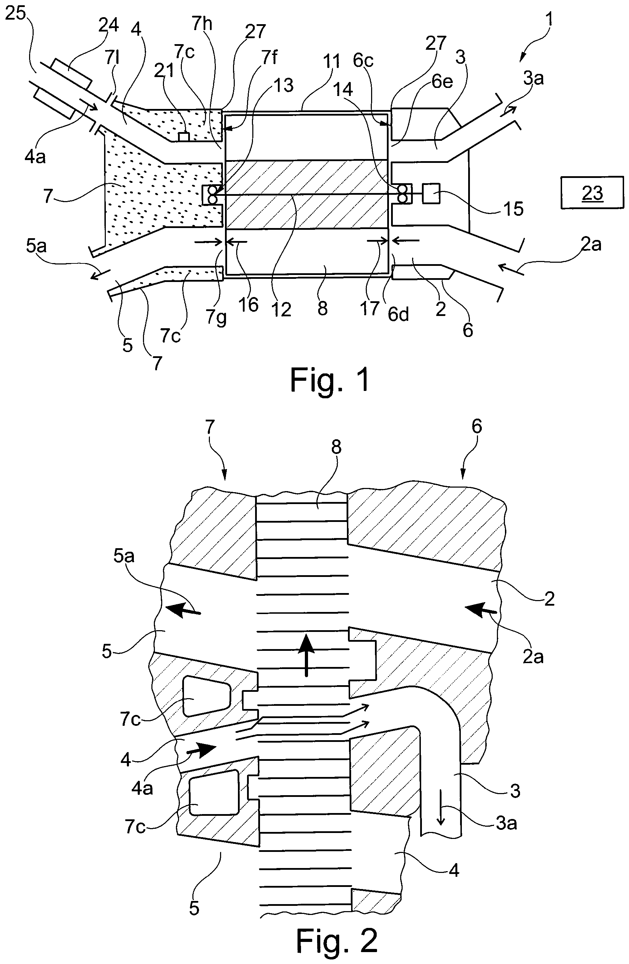

Fig. 1 zeigt schematisch einen Druckwellenlader 1 zum Verdichten von Frischluft 2a für einen nicht dargestellten Verbrennungsmotor, dem eine verdichtete Frischluft, auch als Ladeluft 3a bezeichnet, zugeführt wird. Der Druckwellenlader 1 umfasst ein Kaltgasgehäuse 6, ein Heissgasgehäuse 7 sowie ein dazwischen angeordnetes Rotorgehäuse 11, wobei innerhalb des Rotorgehäuses 11 ein rotierbarer Zellenrotor 8 angeordnet ist. Der Zellenrotor 8 umfasst eine Rotorwelle 12, welche an beiden Enden in je einem ersten beziehungsweise einem zweiten Lager 13,14 drehbar gelagert ist. Das erste Lager 13 ist im Heissgasgehäuse 7 angeordnet, wogegen das zweite Lager 14 im Kaltgasgehäuse 6 angeordnet ist. Das Heissgasgehäuse 7 umfasst einen Hochdruckabgaskanal 4 und einen Niederdruckabgaskanal 5, wobei der vom Motor einströmende Hochdruckabgasstrom 4a dem Hockdruckabgaskanal 4 zugeführt wird, und wobei der aus dem Niederdruckabgaskanal 5 ausströmende Niederdruckabgasstrom 5a einem Auspuff zugeleitet wird. Das Kaltgasgehäuse 6 umfasst einen Frischluftkanal 2 und einen Ladeluftkanal 3. Das Kaltgasgehäuse 6 könnte in einer weiteren Ausführungsform auch mehrere Frischluftkanäle 2 und mehrere Ladeluftkanäle 3 umfassen, vorzugsweise je zwei. Das Heissgasgehäuse 7 könnte in einer weiteren Ausführungsform auch mehrere Hochdruckabgaskanäle 4 und mehrere Niederdruckabgaskanäle 5 umfassen, vorzugsweise je zwei. Der Hochdruckabgaskanal 4, der Niederdruckabgaskanal 5, der Frischluftkanal 2 und der Ladeluftkanal 3 sind in der für einen Druckwellenlader üblich, jedoch nur schematisch dargestellten Anordnung Fluid leitend mit dem Zellenrotor 8 verbunden ist, um die angesaugte Frischluft 2a mit Hilfe des Hochdruckabgasstroms 4a zu verdichten und als Ladeluft 3a dem Verbrennungsmotor zuzuführen. Das Heissgasgehäuse 7 weist an der zum Zellenrotor 8 hin ausgerichteten Stirnseite 7f eine Einlassöffnung 7h sowie eine Auslassöffnung 7g auf. Zwischen dieser Stirnseite 7f und dem Zellenrotor 8 besteht ein Spalt 16. Der Spalt 16 weist vorzugsweise eine Breite im Bereich von 0,05 bis 0,2 mm auf, und insbesondere eine Breite von etwa 0,1 mm. Das Kaltgasgehäuse 6 weist an der zum Zellenrotor 8 hin ausgerichteten Stirnseite 6c eine Einlassöffnung 6d sowie eine Auslassöffnung 6e auf. Zwischen dieser Stirnseite 6c und dem Zellenrotor 8 besteht ein Spalt 17.

Das Heissgasgehäuse 7 umfasst einen schematisch dargestellten Wärmetauscher 7c, wobei der Wärmetauscher 7c derart ausgestaltet ist, dass zumindest das erste Lager 13 gekühlt wird. Besonders vorteilhaft ist der Wärmetauscher 7c derart ausgestaltet, dass auch der Hochdruckabgaskanal 4 kühlbar ist, und somit der durch den Hochdruckabgaskanal 4 strömende Hochdruckabgasstrom 4a gekühlt wird. Der Kühlstrom ist vorzugsweise derart im Wärmetauscher 7c geleitet, dass das Kühlmittel zuerst das erste Lager 13 kühlt und danach dem Hochdruckabgaskanal 4 zugeleitet wird um diesen zu kühlen. Das Kühlmittel fliesst vorzugsweise in Kühlkanälen, die sich in der Aussenwand des Hochdruckabgaskanals 4 befinden. In einer weitere vorteilhaften Ausgestaltung ist der Wärmetauscher 7c derart ausgestaltet, dass zudem auch der Niederdruckabgaskanal 5 kühlbar ist, sodass der durch diesen Kanal strömende Niederdruckabgasstrom 5a gekühlt wird. Als Kühlmittel wird vorzugsweise Wasser verwendet. In einer vorteilhaften Ausgestaltung sind die Kühlkanäle mit dem Wasserkreislauf eines Verbrennungsmotors verbunden, sodass dieser das Kühlwasser liefert und die Umwälzung bewirkt. Die Rotorwelle 12 ist im dargestellten Ausführungsbeispiel von einem im Kaltgasgehäuse 6 angeordneten Elektromotor 15 angetrieben. Die Rotorwelle 12 könnte beispielsweise auch von einem Riemenantrieb angetrieben sein.

In einer vorteilhaften Ausgestaltung ist im Druckwellenlader 1 ein Sensor 21 angeordnet zur Erfassung der Temperatur des Hochdruckabgasstroms 4a, der Temperatur des Niederdruckabgasstroms 5a, oder einer damit zusammenhängenden Grösse, wobei der Sensor 21 Signal übertragend mit einer Regelvorrichtung 23 verbunden ist. Der Wärmetauscher 7c ist Fluid leitend mit einer nicht dargestellten Wärmeabgabevorrichtung verbunden, sodass ein Wasserkreislauf ausgebildet wird, der auch eine nicht dargestellte Umwälzpumpe umfasst. In einer bevorzugten Ausgestaltung ist die Umwälzpumpe von der Regelvorrichtung 23 ansteuerbar, sodass die Kühlleistung des Wärmetauschers 7c ansteuerbar ist, vorzugsweise in Abhängigkeit einer vom Sensor 21 gemessenen Temperatur.

In einem vorteilhaften Verfahren erfolgt während eines Kaltstartes keine oder nur eine reduzierte Kühlung des Wärmetauschers 7c, sodass während einer ersten Startphase S1 keine oder eine nur reduzierte Kühlung erfolgt, bis der Druckwellenlader 1, insbesondere der Hochdruckabgasstrom oder der Niederdruckabgasstrom eine Minimaltemperatur Tₘᵢₙ aufweist, und dass die Kühlleistung des Wärmetauschers 7c danach erhöht wird. Dieses Verfahren weist den Vorteil auf, dass der Druckwellenlader während dem Kaltstart schnell erwärmt wird, und deshalb schnell die erforderliche Druckleistung erbringt. In einem weiteren vorteilhaften Verfahren wird die Kühlleistung des Wärmetauschers bei einem Kaltstart während einer vorgegebenen Startzeitdauer Tₛₜ reduziert oder der Wärmetauscher 7c wird ausgeschaltet, und die Kühlleistung des Wärmetauschers 7c wird nach Ablauf der Startzeitdauer Tₛₜ erhöht.

Figur 2 zeigt in einer Prinzipdarstellung die Gasführung in einem Druckwellenlager mit Zellenrad 8. In dem rotierenden Zellenrotor 8 strömen durch den Frischluftkanal 2 angesaugte Frischluft 2a und durch den Hochdruckabgaskanal 4 das von dem Verbrennungstakt kommende Abgas 4a. Die angesaugte Frischluft 2a wird von dem Druck des Abgases 4a komprimiert und anschließend über den Ladeluftkanal 3 dem Verbrennungsmotor auf einer Ansaugseite zugeführt und strömt dann in den Zylinder in dem ein Ladungswechselvorgang stattfindet und wird dort mit Kraftstoff vermengt und verbrannt. Im Anschluss daran wird das Abgas 4a durch den Hochdruckabgaskanal 4 dem Druckwellenlader 1 wiederum zugeführt. Nach der Verdichtung der Frischluft 2a durch das Abgas 4a wird das nicht mehr benötigte Abgas 5a in einen Niederdruckabgaskanal 5 entlassen und dem weiteren Abgasstrang zugeführt.

Im Heissgasgehäuse 7 verläuft ein Hochdruckabgaskanal 4, welcher dem Zellenrotor 8 zugeführt ist. Im Heissgasgehäuse 7 ist zudem ein Wärmetauscher 7c angeordnet, der im dargestellten Ausführungsbeispiel als Wasserkanäle 7d ausgestaltet ist, welche den Hochdruckabgaskanal 4 umgeben um dessen Innenwände zu kühlen und um dadurch den durchströmenden Hochdruckabgasstrom 4a zu kühlen. Im dargestellten Ausführungsbeispiel ist der Wärmetauscher 7c beziehungsweise die Wasserkanäle 7d Teil des Heissgasgehäuses 7. In einer bevorzugten, nicht dargestellten Ausgestaltung sind die Wasserkanäle 7d zuerst demjenigen Bereich des Heissgasgehäuses 7 zugeleitet, in welchem das erste Lager 13 angeordnet ist, um zuerst das erste Lager 13 zu kühlen, bevor derjenige Teil des Heissgasgehäuses 7 gekühlt wird, welcher den Hochdruckabgaskanal 4 umschliesst. In einer vorteilhaften, nicht dargestellten Ausführungsform, könnten auch im Bereich des Niederdruckabgaskanals 5 ein Wärmetauscher 7c, insbesondere Wasserkanäle 7d angeordnet sein, um den Niederdruckabgasstrom 5a zu kühlen.

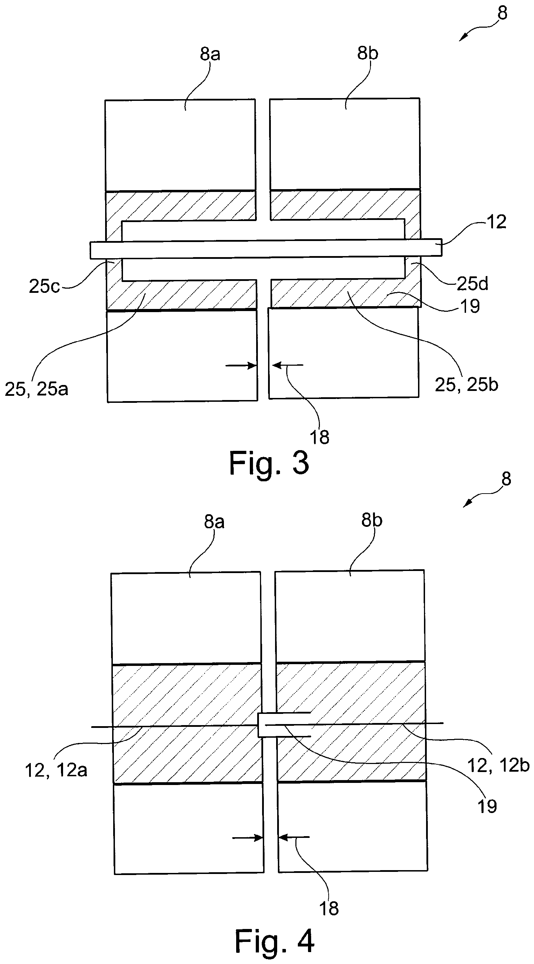

Figur 3 zeigt ein erstes Ausführungsbeispiel eines Zellenrotors 8, der in Verlaufsrichtung der Rotorwelle 12 zweiteilig ausgestaltet ist und ein erstes Zellenrotorteil 8a mit einem ersten Lagerteil 25a und ein zweites Zellenrotorteil 8b mit einem zweiten Lagerteil 25b umfasst, wobei die beiden Zellenrotorteile 8a, 8b beziehungsweise die beiden Lagerteile 25a, 25b einen gegenseitigen Spalt 18 ausbilden. Die Lagerteile 25a, 25b sind an deren Endabschnitte 25c, 25d fest mit der Rotorwelle 12 verbunden. Eine Erwärmung des Zellenrotors 8 hat zur Folge, dass sich die Zellenrotorteile 8a, 8b ausdehnen, sodass sich der Spalt 18 verkleinert. Eine Abkühlung des Zellenrotors 8 hat zur Folge, dass sich der Spalt 18 vergrössert. Die in Figur 3 dargestellte Ausführungsform weist den Vorteil auf, dass der Spalt 16 zwischen der Stirnseite 7f des Heissgasgehäuses 7 und dem ersten Zellenrotorteil 8a konstant oder im Wesentlichen konstant bleibt, unabhängig von der Temperatur des Zellenrotorteils 8a, da die sich auf Grund der Erwärmung ergebende Änderung der Länge des Zellenrotorteils 8a bezüglich der Breite des Spaltes 18 auswirkt.

Figur 4 zeigt ein weiteres Ausführungsbeispiel eines Zellenrotors 8, der in Verlaufsrichtung der Rotorwelle 12 zumindest zweiteilig ausgestaltet ist und ein erstes Zellenrotorteil 8a mit einer ersten Rotorteilwelle 12a und ein zweites Zellenrotorteil 8b mit einer zweiten Rotorteilwelle 12b umfasst, wobei die beiden Zellenrotorteile 8a, 8b beziehungsweise die beiden Rotorteilwellen 12a, 12b über eine Kupplung 19 miteinander verbunden sind. Die beiden Zellenrotorteile 8a, 8b weisen einen Rotorspalt 18 auf. Eine Temperaturveränderung des Zellenrotors 7 hat eine Veränderung der Spaltbreite 18 zur Folge.

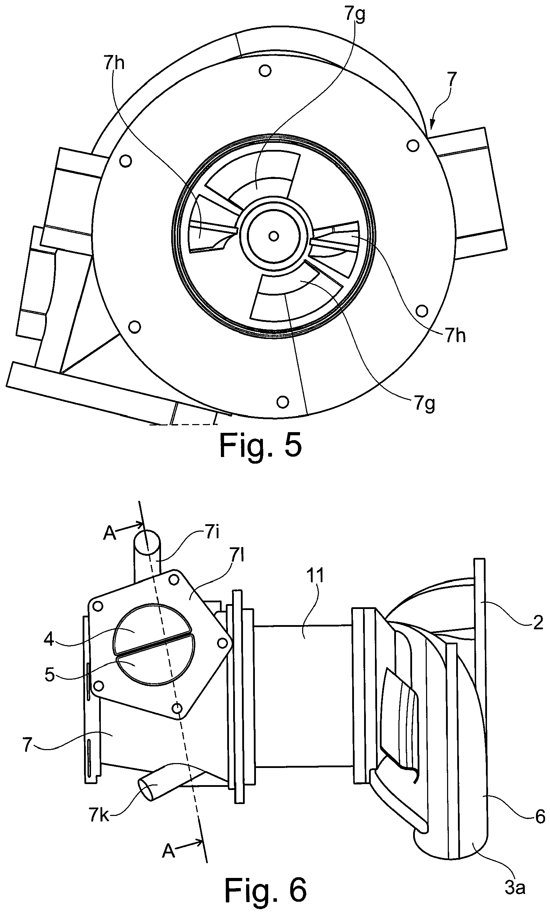

Figur 5 zeigt die Stirnseite 7f eines Heissgasgehäuses 7, wobei an der Stirnseite 7f, in Umfangsrichtung beabstandet, nacheinander folgend eine Einlassöffnung 7h und nachfolgend eine Auslassöffnung 7g angeordnet ist, wobei nachfolgend nochmals eine Einlassöffnung 7h und nachfolgend eine Auslassöffnung 7g angeordnet sind. Ein Druckwellenlader 1 umfassend das in Figur 5 dargestellte Heissgasgehäuse 7 ist derart ausgestaltet, dass dieser eine Gasführung aufweist, welche aus zwei übereinander angeordneten Gasführungen besteht, wie diese in Figur 2 dargestellt ist.

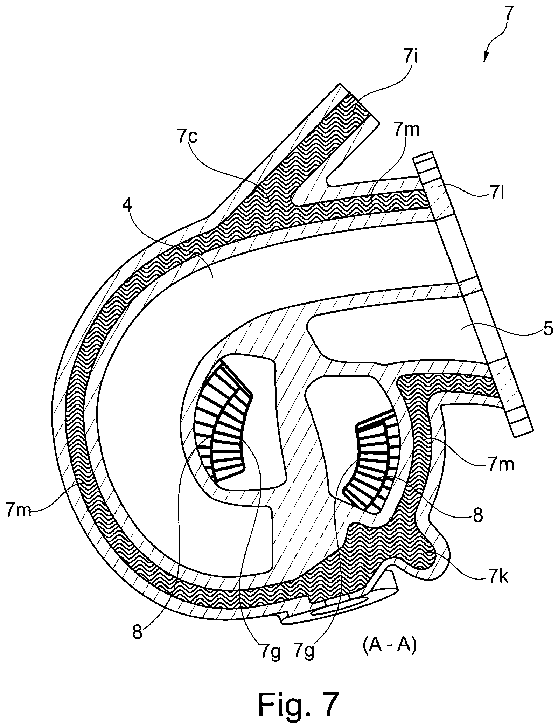

Figur 6 zeigt in einer Seitenansicht ein weiteres Ausführungsbeispiel eines Druckwellenladers 1 mit Heissgasgehäuse 7, Rotorgehäuse 11 und Kaltgasgehäuse 6, wobei das Heissgasgehäuse 7 einen Flansch 71 umfasst, an dem der Hochdruckabgaskanal 4 und der Niederdruckabgaskanal 5 mündet. Zudem ist ein Kühlwassereinlass 7i sowie ein Kühlwasserauslass 7k dargestellt, über welche ein Kühlwasseraustausch mit dem im Heissgasgehäuse 7 angeordneten Wärmetauscher 7c stattfindet. Figur 7 zeigt einen Schnitt durch Figur 6 entlang der Schnittlinie A-A. Der Hochdruckabgaskanal 4 sowie der Niederdruckabgaskanal 5 sind zumindest teilweise von einem Wassermantel 7m umgeben, der sich innerhalb des Wärmetauschers 7c befindet, wobei das Wasser über die Zu- und Ableitung 7i, 7k ausgetauscht und ausserhalb des Heissgasgehäuses 7 gekühlt wird. Das Heissgasgehäuse 7 ist vorzugsweise abschnittweise doppelwandig ausgestaltet, um zwischen den beabstandeten Wänden den Wärmetauscher 7c auszubilden. Aus Figur 7 sind zudem die zwei Auslassöffnungen 7g sowie ein Teil des dahinter angeordneten Zellenrades 8 ersichtlich.

Die Kühlvorrichtung umfassend den Wärmetauscher 7c kann auf unterschiedliche Weise ausgestaltet sein, und könnte zum Beispiel auch als Dampfkreislauf ausgestaltet sein, mit heat pipes und einem Dampfkreislauf mit Phasenveränderung.

Die Kühlung des Druckwellenladers 1 hat zur Folge, dass dieser während dem Betrieb eine tiefere Temperatur aufweist. Dies ergibt den Vorteil, dass zur Dichtung zwischen dem Kaltgehäuse 6 und dem Rotorgehäuse 11 und/oder zwischen dem Heissgasgehäuse 7 und dem Rotorgehäuse 11 Dichtring 27 zur Abdichtung verwenden werden können, wobei die Dichtringe 27 aus Metall oder Kunststoff bestehen.

Wie in Figur 1 dargestellt kann es sich zudem als vorteilhaft erweisen einen zusätzlichen Wärmetauscher 24 anzuordnen, um eine Hochdruckabgaszufuhrleitung 25 zu kühlen, wobei die Hochdruckabgaszufuhrleitung 25 im Abgasflussrichtung vorgängig dem Hochdruckabgaskanal 4 angeordnet ist.

## Patentansprüche

1. Druckwellenlader (1) zum Verdichten von Frischluft (2a) für einen Verbrennungsmotor, umfassend ein Kaltgasgehäuse (6), ein Heissgasgehäuse (7) sowie ein dazwischen angeordnetes Rotorgehäuse (11), wobei innerhalb des Rotorgehäuses (11) ein rotierbarer Zellenrotor (8) angeordnet ist, und wobei das Heissgasgehäuse (7) einen Hochdruckabgas kanal (4) und einen Niederdruckabgaskanal (5) umfasst, und wobei das Kaltgasgehäuse (6) einen Frischluftkanal (2) und einen Ladeluftkanal (3) umfasst, und wobei der Hochdruckabgaskanal (4), der Niederdruckabgaskanal (5), der Frischluftkanal (2) und der Ladeluftkanal (3) Fluid leitend mit dem Zellenrotor (8) verbunden sind, wobei das Heissgasgehäuse (7) ein erstes Lager (13) und das Kaltgasgehäuse (6) ein zweites Lager (14) umfasst, und dass der Zellenrotor (8) eine Rotorwelle (12) umfasst, welche im ersten und im zweiten Lager (13,14) gelagert ist, und dass das Heissgasgehäuse (7) einen Wärmetauscher (7c) umfasst welcher derart ausgestaltet ist, dass zumindest das erste Lager (13) kühlbar ist, wobei der Wärmetauscher (7c) derart ausgestaltet ist, dass der Hochdruckabgaskanal (4) kühlbar ist, **dadurch gekennzeichnet, dass** der Wärmetauscher (7c) derart ausgestaltet ist, dass vorgängig das erste Lager (13) gekühlt ist und nachfolgend der Hochdruckabgaskanal (4), dass die Kühlleistung des Wärmetauschers (7c) während eines Kaltstarts in einer ersten Startphase (S1) reduziert ist oder dass der Wärmetauscher (7c) ausgeschaltet ist, bis der Druckwellenlader eine Minimaltemperatur (Tₘᵢₙ) aufweist, und dass die Kühlleistung des Wärmetauschers (7c) danach erhöht wird.

2. Druckwellenlader nach einem der vorhergehenden Ansprüchen, **dadurch gekennzeichnet, dass** der Wärmetauscher (7c) derart ausgestaltet ist, dass auch der Niederdruckabgaskanal (5) kühlbar ist.

3. Druckwellenlader nach einem der vorhergehenden Ansprüche, **dadurch gekennzeichnet, dass** der Wärmetauscher (7c) Kühlkanäle (7d) umfasst, welche im Heissgasgehäuse (7) angeordnet sind, und dass der Wärmetauscher (7c) insbesondere einen Wasserkreislauf zur Kühlung umfasst.

4. Druckwellenlader nach einem der vorhergehenden Ansprüche, **dadurch gekennzeichnet, dass** ein zusätzlicher Wärmetauscher (24) eine Hochdruckabgaszufuhrleitung (25) kühlt, wobei die Hochdruckabgaszufuhrleitung (25) im Abgasflussrichtung vorgängig dem Hochdruckabgaskanal (4) angeordnet ist.

5. Druckwellenlader nach einem der vorhergehenden Ansprüche, **dadurch gekennzeichnet, dass** zumindest das erste Lager (13) oder das zweite Lager (14) als ein Wälzlager ausgestaltet ist.

6. Druckwellenlader nach einem der vorhergehenden Ansprüche, **dadurch gekennzeichnet, dass** zumindest das erste Lager (13) eine Öl- oder Fettschmierung aufweist.

7. Druckwellenlader nach einem der vorhergehenden Ansprüche, **dadurch gekennzeichnet, dass** das Heissgasgehäuse (7) aus Aluminium oder einer Aluminiumlegierung besteht.

8. Druckwellenlader nach einem der vorhergehenden Ansprüche, **dadurch gekennzeichnet, dass** der Zellenrotor (8) in Verlaufsrichtung der Rotorwelle (12) zumindest zweiteilig ausgestaltet ist und ein erstes Zellenrotorteil (8a) und ein zweites Zellenrotorteil (8b) umfasst, wobei die beiden Zellenrotorteile (8a, 8b) in Verlaufsrichtung der Rotorwelle (12) gegenseitig beabstandet sind.

9. Druckwellenlader nach einem der vorhergehenden Ansprüche, dass zwischen dem Kaltgehäuse (6) und dem Rotorgehäuse (11) und/oder zwischen dem Heissgasgehäuse (7) und dem Rotorgehäuse (11) ein Dichtring (27) zur Abdichtung angeordnet sind, und dass der Dichtring (27) aus Metall oder Kunststoff besteht.

10. Verfahren zum Betrieb eines Druckwellenladers (1) zum Verdichten von Frischluft für einen Verbrennungsmotor, wobei der Druckwellenlader (1) ein Kaltgasgehäuse (6), ein Heissgasgehäuse (7) und ein dazwischen angeordnetes Rotorgehäuse (11) umfasst, wobei innerhalb des Rotorgehäuses (11) ein rotierbarer Zellenrotor (8) angeordnet ist, und wobei das Heissgasgehäuse (7) einen Hochdruckabgaskanal (4) und einen Niederdruckabgaskanal (5) umfasst, wobei das Heissgasgehäuse (7) durch einen Wärmetauscher (7c) derart gekühlt wird, dass ein im Heissgasgehäuse (7) angeordnetes erstes Lager (14) gekühlt wird, und dass der Zellenrotor (8) vom ersten Lager (14) und von einem im Kaltgasgehäuse (6) angeordneten zweiten Lager (15) gelagert wird, wobei der Wärmetauscher (7c) derart ausgestaltet ist, dass auch der Hochdruckabgaskanal (4) kühlbar ist und somit der durch den Hochdruckabgaskanal (4) strömende Hochdruckabgasstrom (4a) gekühlt wird, **dadurch gekennzeichnet, dass** der Kühlstrom derart im Wärmetauscher (7c) geleitet wird, dass das Kühlmittel zuerst das erste Lager (13) kühlt und danach dem Hochdruckabgaskanal (4) zugeleitet wird um diesen zu kühlen, dass die Kühlleistung des Wärmetauschers (7c) während eines Kaltstarts in einer ersten Startphase (S1) reduziert ist oder dass der Wärmetauscher (7c) ausgeschaltet ist, bis der Druckwellenlader eine Minimaltemperatur (Tₘᵢₙ) aufweist, und dass die Kühlleistung des Wärmetauschers (7c) danach erhöht wird.

11. Verfahren nach Anspruch 10, **dadurch gekennzeichnet, dass** ein durch den Hochdruckabgaskanal (4) und/oder durch eine dem Hochdruckabgaskanal (4) vorgelagerte Hochdruckabgaszufuhrleitung (25) strömender Abgasstrom (4a) des Verbrennungsmotors gekühlt wird.

12. Verfahren nach Anspruch 11, **dadurch gekennzeichnet, dass** die Kühlleistung des Wärmetauschers (7c) in Funktion einer gemessenen Temperatur beeinflusst wird.

13. Verfahren nach Anspruch 12, **dadurch gekennzeichnet, dass** die Kühlleistung des Wärmetauschers (7c) bei einem Kaltstart während einer vorgegebenen Startzeitdauer (Tst) reduziert ist oder der Wärmetauscher (7c) ausgeschaltet ist, und dass die Kühlleistung des Wärmetauschers (7c) nach Ablauf der Startzeitdauer (Tₛₜ) erhöht wird.

## Claims

1. Pressure wave supercharger (1) for compressing fresh air (2a) for an internal combustion engine, comprising a cold gas housing (6), a hot gas housing (7), and a rotor casing (11), which is arranged therebetween, wherein a rotatable cell rotor (8) is arranged within the rotor casing (11), and wherein the hot gas housing (7) comprises a high-pressure exhaust duct (4) and a low-pressure exhaust duct (5), and wherein the cold gas housing (6) comprises a fresh air duct (2) and a charge air duct (3), and wherein the high-pressure exhaust duct (4), the low-pressure exhaust duct (5), the fresh air duct (2) and the charge air duct (3) are fluidically connected to the cell rotor (8), wherein the hot gas housing (7) comprises a first bearing (13), and the cold gas housing (6) comprises a second bearing (14), and that the cell rotor (8) comprises a rotor shaft (12), which is mounted in the first and second bearings (13, 14), and that the hot gas housing (7) comprises a heat exchanger (7c), which is designed in such a way that at least the first bearing (13) can be cooled, wherein the heat exchanger (7c) is designed in such a way that the high-pressure exhaust duct (4) can be cooled, **characterized in that** the heat exchanger (7c) is designed in such a way that the first bearing (13) is cooled first and then the high-pressure exhaust duct (4), **in that** the cooling capacity of the heat exchanger (7c) during a cold start is reduced in a first starting phase (S1) or **in that** the heat exchanger (7c) is switched off until the pressure wave supercharger has a minimum temperature (Tmin), and **in that** the cooling capacity of the heat exchanger (7c) is then increased.

2. Pressure wave supercharger according to one of the preceding claims, **characterized in that** the heat exchanger (7c) is designed in such a way that the low-pressure exhaust duct (5) can also be cooled.

3. Pressure wave supercharger according to either of the preceding claims, **characterized in that** the heat exchanger (7c) comprises cooling ducts (7d), which are arranged in the hot gas housing (7), and **in that** the heat exchanger (7c) in particular comprises a water circuit for cooling.

4. Pressure wave supercharger according to one of the preceding claims, **characterized in that** an additional heat exchanger (24) cools a high-pressure exhaust feed line (25), wherein the high-pressure exhaust feed line (25) is arranged upstream of the high-pressure exhaust duct (4) in the exhaust gas flow direction.

5. Pressure wave supercharger according to one of the preceding claims, **characterized in that** at least the first bearing (13) or the second bearing (14) is designed as a rolling bearing.

6. Pressure wave supercharger according to one of the preceding claims, **characterized in that** at least the first bearing (13) has an oil or grease lubrication system.

7. Pressure wave supercharger according to one of the preceding claims, **characterized in that** the hot gas housing (7) consists of aluminum or an aluminium alloy.

8. Pressure wave supercharger according to one of the preceding claims, **characterized in that** the cell rotor (8) is of at least two-part design in the direction of extent of the rotor shaft (12) and comprises a first cell rotor part (8a) and a second cell rotor part (8b), wherein the two cell rotor parts (8a, 8b) are spaced apart in the direction of extent of the rotor shaft (12).

9. Pressure wave supercharger according to one of the preceding claims, that a sealing ring (27) for sealing is arranged between the cold housing (6) and the rotor casing (11) and/or between the hot gas housing (7) and the rotor casing (11), and in that the sealing ring (27) is composed of metal or plastic.

10. Method for operating a pressure wave supercharger (1) for compressing fresh air for an internal combustion engine, wherein the pressure wave supercharger (1) comprises a cold gas housing (6), a hot gas housing (7), and a rotor casing (11), which is arranged therebetween, wherein a rotatable cell rotor (8) is arranged within the rotor casing (11), and wherein the hot gas housing (7) comprises a high-pressure exhaust duct (4) and a low-pressure exhaust duct (5), wherein the hot gas housing (7) is cooled by a heat exchanger (7c) in such a way that a first bearing (14) arranged in the hot gas housing (7) is cooled, and that the cell rotor (8) is supported by the first bearing (14) and by a second bearing (15) arranged in the cold gas housing (6), wherein the heat exchanger (7c) is designed in such a way that the high-pressure exhaust duct (4) can also be cooled and hence the high-pressure exhaust gas flow (4a) flowing through the high-pressure exhaust duct (4) is cooled, **characterized in that** the cooling flow is guided in the heat exchanger (7c) in such a way that the coolant first of all cools the first bearing (13) and is then fed to the high-pressure exhaust duct (4) in order to cool the latter, **in that** the cooling capacity of the heat exchanger (7c) during a cold start is reduced in a first starting phase (S1) or **in that** the heat exchanger (7c) is switched off until the pressure wave supercharger has a minimum temperature (Tₘᵢₙ), and **in that** the cooling capacity of the heat exchanger (7c) is then increased.

11. Method according to Claim 10, **characterized in that** an exhaust gas flow (4a) from the internal combustion engine flowing through the high-pressure exhaust duct (4) and/or through a high-pressure exhaust feed line (25) arranged upstream of the high-pressure exhaust duct (4) is cooled.

12. Method according to Claim 11, **characterized in that** the cooling capacity of the heat exchanger (7c) is influenced as a function of a measured temperature.

13. Method according to Claim 12, **characterized in that** the cooling capacity of the heat exchanger (7c) during a cold start is reduced during a predetermined starting period (Tₛₜ), or the heat exchanger (7c) is switched off, and **in that** the cooling capacity of the heat exchanger (7c) is increased on expiry of the starting period (Tₛₜ).

## Revendications

1. Compresseur à ondes de pression (1) pour comprimer de l'air frais (2a) pour un moteur à combustion, comprenant un boîtier de gaz froid (6), un boîtier de gaz chaud (7) ainsi qu'un boîtier de rotor (11) disposé entre eux, un rotor à cellules rotatif (8) étant disposé à l'intérieur du boîtier de rotor (11), et le boîtier de gaz chaud (7) comprenant un conduit de gaz d'échappement haute pression (4) et un conduit de gaz d'échappement basse pression (5), et le boîtier de gaz froid (6) comprenant un conduit d'air frais (2) et un conduit d'air de suralimentation (3), et le conduit de gaz d'échappement haute pression (4), le conduit de gaz d'échappement basse pression (5), le conduit d'air frais (2) et le conduit d'air de suralimentation (3) étant connectés par conduction de fluide au rotor à cellules (8), le boîtier de gaz chaud (7) comprenant un premier palier (13) et le boîtier de gaz froid (6) comprenant un deuxième palier (14), et que le rotor à cellules (8) comprend un arbre de rotor (12) qui est supporté dans le premier et le deuxième palier (13, 14), et que le boîtier de gaz chaud (7) comprend un échangeur de chaleur (7c) qui est réalisé de telle sorte qu'au moins le premier palier (13) puisse être refroidi, l'échangeur de chaleur (7c) étant configuré de telle sorte que le conduit de gaz d'échappement haute pression (4) puisse être refroidi,
**caractérisé en ce que**
l'échangeur de chaleur (7c) est configuré de telle sorte qu'au préalable, le premier palier (13) soit refroidi puis le conduit de gaz d'échappement haute pression (4),
**en ce que** la puissance de refroidissement de l'échangeur de chaleur (7c) pendant un démarrage à froid dans une première phase de démarrage (S1) est réduite ou **en ce que**
l'échangeur de chaleur (7c) est coupé tant que le compresseur à ondes de pression n'a pas atteint une température minimale (Tₘᵢₙ), et
**en ce que** la puissance de refroidissement de l'échangeur de chaleur (7c) est ensuite augmentée.

2. Compresseur à ondes de pression selon l'une quelconque des revendications précédentes, **caractérisé en ce que** l'échangeur de chaleur (7c) est configuré de telle sorte que le conduit de gaz d'échappement basse pression (5) puisse également être refroidi.

3. Compresseur à ondes de pression selon l'une quelconque des revendications précédentes, **caractérisé en ce que** l'échangeur de chaleur (7c) comprend des conduits de refroidissement (7d) qui sont disposés dans le boîtier de gaz chaud (7), et **en ce que** l'échangeur de chaleur (7c) comprend en particulier un circuit d'eau pour le refroidissement.

4. Compresseur à ondes de pression selon l'une quelconque des revendications précédentes, **caractérisé en ce qu'**un échangeur de chaleur supplémentaire (24) refroidit une conduite d'alimentation en gaz d'échappement haute pression (25), la conduite d'alimentation en gaz d'échappement haute pression (25) étant disposée dans la direction du flux de gaz d'échappement avant le conduit de gaz d'échappement haute pression (4).

5. Compresseur à ondes de pression selon l'une quelconque des revendications précédentes, **caractérisé en ce qu'**au moins le premier palier (13) ou le deuxième palier (14) est configuré sous forme de palier à roulement.

6. Compresseur à ondes de pression selon l'une quelconque des revendications précédentes, **caractérisé en ce qu'**au moins le premier palier (13) présente une lubrification à huile ou à graisse.

7. Compresseur à ondes de pression selon l'une quelconque des revendications précédentes, **caractérisé en ce que** le boîtier de gaz chaud (7) se compose d'aluminium ou d'un alliage d'aluminium.

8. Compresseur à ondes de pression selon l'une quelconque des revendications précédentes, **caractérisé en ce que** le rotor à cellules (8) est configuré au moins en deux parties dans la direction d'étendue de l'arbre de rotor (12) et comprend une première partie de rotor à cellules (8a) et une deuxième partie de rotor à cellules (8b), les deux parties de rotor à cellules (8a, 8b) étant espacées mutuellement dans la direction d'étendue de l'arbre de rotor (12).

9. Compresseur à ondes de pression selon l'une quelconque des revendications précédentes, qu'entre le boîtier froid (6) et le boîtier de rotor (11) et/ou entre le boîtier de gaz chaud (7) et le boîtier de rotor (11) est disposée une bague d'étanchéité (27) pour réaliser l'étanchéité, et en ce que la bague d'étanchéité (27) se compose de métal ou de plastique.

10. Procédé pour faire fonctionner un compresseur à ondes de pression (1) pour comprimer de l'air frais pour un moteur à combustion, le compresseur à ondes de pression (1) comprenant un boîtier de gaz froid (6), un boîtier de gaz chaud (7) et un boîtier de rotor (11) disposé entre eux, un rotor à cellules rotatif (8) étant disposé à l'intérieur du boîtier de rotor (11), et le boîtier de gaz chaud (7) comprenant un conduit de gaz d'échappement haute pression (4) et un conduit de gaz d'échappement basse pression (5), le boîtier de gaz chaud (7) étant refroidi par un échangeur de chaleur (7c) de telle sorte qu'un premier palier (14) disposé dans le boîtier de gaz chaud (7) soit refroidi, et que le rotor à cellules (8) soit supporté par le premier palier (14) et par un deuxième palier (15) disposé dans le boîtier de gaz froid (6), l'échangeur de chaleur (7c) étant configuré de telle sorte que le conduit de gaz d'échappement haute pression (4) puisse également être refroidi et que le flux de gaz d'échappement haute pression (4a) s'écoulant à travers le conduit de gaz d'échappement haute pression (4) soit donc refroidi, **caractérisé en ce que** le courant de refroidissement est conduit dans l'échangeur de chaleur (7c) de telle sorte que le réfrigérant refroidisse d'abord le premier palier (13) et ensuite soit acheminé au conduit de gaz d'échappement haute pression (4) afin de le refroidir, **en ce que** la puissance de refroidissement de l'échangeur de chaleur (7c) pendant un démarrage à froid dans une première phase de démarrage (S1) est réduite ou **en ce que** l'échangeur de chaleur (7c) est coupé tant que le compresseur à ondes de pression ne présente pas une température minimale (Tₘᵢₙ), et **en ce que** la puissance de refroidissement de l'échangeur de chaleur (7c) est ensuite augmentée.

11. Procédé selon la revendication 10, **caractérisé en ce qu'**un courant de gaz d'échappement (4a) du moteur à combustion s'écoulant à travers le conduit de gaz d'échappement haute pression (4) et/ou à travers une conduite d'alimentation en gaz d'échappement haute pression (25) montée en amont du conduit de gaz d'échappement haute pression (4) est refroidi.

12. Procédé selon la revendication 11, **caractérisé en ce que** la puissance de refroidissement de l'échangeur de chaleur (7c) est influencée en fonction d'une température mesurée.

13. Procédé selon la revendication 12, **caractérisé en ce que** la puissance de refroidissement de l'échangeur de chaleur (7c) lors d'un démarrage à froid pendant une durée de démarrage prédéfinie (Tₛₜ) est réduite ou l'échangeur de chaleur (7c) est coupé et **en ce que** la puissance de refroidissement de l'échangeur de chaleur (7c) est augmentée après l'écoulement de la durée de démarrage (Tₛₜ) .
